# EUROPÄISCHE PATENTSCHRIFT

(11) **EP 0 354 362 B1**
(45) Veröffentlichungstag und Bekanntmachung des Hinweises auf die Patenterteilung: **28.06.1995**
(21) Anmeldenummer: 89112546.0
(22) Anmeldetag: 10.07.1989
(51) Int. Cl.: G06K 1/12, G06K 7/10

(54) **Verfahren zum Aufbringen und Lesen von und Flasche mit optisch lesbaren Codemarkierungen**
Method of marking a bottle with, and optically reading, readable codes
Procédé de marquage et de lecture de codes lisibles optiquement, et bouteilles pourvues de telles marques

(30) Priorität: 09.08.1988 CH 3004/88
(43) Veröffentlichungstag der Anmeldung: 14.02.1990
(73) Patentinhaber: ELPATRONIC AG, CH-6303 Zug (CH)
(72) Erfinder: Frei, Matthias, CH-5430 Wettingen (CH); Scoll, Hans-Willy, D-4200 Oberhausen (DE)

(56) Entgegenhaltungen:
- EP-A- 0 256 804
- DE-A- 3 703 809
- FR-A- 2 594 982
- GB-A- 2 059 354
- US-A- 3 803 637

## Beschreibung

Die Erfindung betrifft ein Verfahren zum Aufbringen von optisch lesbaren Codemarkierungen, eine Flasche mit optisch lesbaren Codemarkierungen und ein Verfahren zum Lesen von optisch lesbaren Codemarkierungen der im Oberbegriff der Patentansprüche 1, 10 bzw. 11 angegebenen Art.

Für Anwendungen in der Inspektions- und Verpackungstechnik werden häufig einfach aufbringbare und mit großer Zuverlässigkeit automatisch lesbare Codemarkierungen benötigt. Allgemein bekannt ist die automatisch lesbare Strichcodierung auf bedruckten Verpackungen, bei der eine Folge von schwarzen Balken auf weißem Untergrund die Codemarkierungen bildet. Hergestellt werden diese Codemarkierungen durch einen Druckvorgang oder durch Abtragen der obersten Schicht bei einem aus kontrastreichen Schichten aufgebauten Material. Das automatische Lesen von solchen Codemarkierungen erfolgt mit einem Lesekopf. Dabei wird ein Lichtstrahl gleichmäßig über die Codemarkierungen geführt, und das reflektierte Licht wird registriert und ausgewertet. An den kontraststarken (schwarzen) Balken wird der Lesestrahl stärker absorbiert und bewirkt so eine Schwächung der reflektierten Lichtintensität, die von einem Photosensor registriert und in einer nachgeschalteten Elektronik ausgewertet wird. Die wesentlichen Nachteile des mit einer solchen Strichcodierung arbeitenden bekannten Verfahrens sind:
- die Strichcodierung muß kontrastreich sein und ist somit auch gut sichtbar (schwarze Balken auf weißem Grund), was nicht immer erwünscht ist;
- die Strichcodierung muß bei einem einheitlichen Material aufgedruckt sein und kann nur bei kontrastreichem Schichtmaterial durch Abtragen hergestellt werden;
- die Markierung ist gegen Kratzer und Beschädigungen empfindlich, da dadurch die automatische Lesbarkeit beeinträchtigt und in vielen Fällen unmöglich gemacht wird; und
- eine solche Strichcodierung, die als Lackschicht od.dgl. aufgebracht wird, ist für Glas- und Kunststoffflaschen ungeeignet, weil sie im Gebrauch abblättern oder abgekratzt werden kann, da eine solche Strichcodierung bei Kunststoffflaschen nicht eingebrannt werden kann, viele Lacke sich mit Kunststoff nicht vertragen und im übrigen solche deutlich sichtbaren Strichcodierungen aus schwarzen und weißen Balken bei transparenten Glas- und Kunststoffflaschen aus ästhetischen Gründen abgelehnt werden.

Das ältere deutsche Patent Nr. 37 22 422 derselben Anmelderin beschreibt eine Inspektionsmaschine für Kunststoffflaschen, die hauptsächlich zum Inspizieren von Rückgabeflaschen aus Kunststoff bestimmt ist, d.h. von Flaschen, die vom Kunden zurückgegeben und dann wieder befüllt werden, was etwa 25 mal pro Flasche erfolgen soll. Gedacht ist dabei insbesondere an Getränkeflaschen aus Polyethylenterephtalat oder PET. Solche Flaschen werden auf Blasformmaschinen hergestellt, die bis zu 48 Blasformen enthalten. Bei solchen Kunststoffflaschen wird mit einer Punktcodierung gearbeitet, für die der in der Glasindustrie geläufige St.-Gobain-Code benutzt wird. Mit Hilfe dieses Codes wird bislang gewöhnlich lediglich die Blasformnummer auf der Flaschenoberfläche markiert, wofür üblicherweise 9 Datenbits zur Verfügung stehen. Zum Aufbringen der 9 Codemarkierungen, die diese Datenbits repräsentieren, sind in der Wand jeder Blasform 9 Bohrungen vorgesehen, in denen Nadeln verschiebbar sind. Wenn eine Nadel mit der Blasforminnenwand bündig ist, gibt es keine Markierung, steht die Nadel in das Innere der Form hinein etwas vor oder gegenüber der Forminnenwand etwas zurück, so empfängt die Flasche bei dem Blasformvorgang an dieser Stelle eine punktförmige Vertiefung bzw. Ausbuchtung. In der Inspektionsmaschine gemäß dem älteren Patent derselben Anmelderin ist in jeder Inspektionsstation ein optisch-elektrischer Sensor vorgesehen, der dazu dient, die Punktcodierung auf der Flasche zu erfassen, indem ein Lichtbündel auf die Flasche geworfen und ein durch die Punktcodierung reflektiertes Lichtbündel zurück zu einem photoelektrischen Empfänger übertragen wird, der mit einer Auswerteelektronik verbunden ist. Bei senkrecht auf die Flaschenoberfläche gerichtetem Sende- und Empfangslichtstrahl wird letzterer nicht mehr zu dem Sensor reflektiert, sobald eine Ausbuchtung oder eine Vertiefung vorhanden ist, da diese das Licht nach allen Richtungen streut und wesentlich weniger Licht zurück in den Sensor gelangen läßt als im Falle ihres Nichtvorhandenseins.

In jüngerer Zeit wird gefordert, daß die Codierung auf einer Kunststoffflasche mindestens auch den Herstellungstag und den Hersteller angeben soll, und zwar über einen Zeitraum von zehn Jahren. Es liegt auf der Hand, daß die Punktcodierung mit Nadeln dafür ungeeignet ist, weil die Bedienungsperson der Blasformmaschine jeden Tag die eingestellte Codierung an bis zu 48 Blasformstationen umzustellen hätte. Das würde eine tägliche Umstellzeit von bis zu ca. 6 Stunden erfordern, wäre also viel zu zeitaufwendig. Wenn darüber hinaus ein fehlerkorrigierbarer Code zu benutzen wäre, kämen zu den 9 Codemarkierungen nochmals fünf Prüfbitmarkierungen hinzu, so daß sich mit Start- und Endbit insgesamt 16 Markierungen ergäben, also 16 Nadeln umgestellt werden müßten, was noch zeitaufwendiger wäre. Wenn sich darüber hinaus die Codemarkierungen über den halben Flaschenumfang erstrecken und aus Vertiefungen bestehen, die gegenüber den Ausbuchtungen bevorzugt werden, weil sie in der Blasform mit größerer Sicherheit ausformbar sind, bestünde die Gefahr, daß die Codemarkierungen die Festigkeit der Flasche beeinträchtigen. Schließlich sind solche mit Nadeln hergestellten Punktcodierungen nicht sehr lesesicher, weil Kratzer in der Flaschenoberfläche dieselbe Streuwirkung wie Aus- oder Einbuchtungen haben können. Der Grund für diesen Nachteil ist, daß bei dem Lesevorgang die glatte Oberfläche als Reflektor benutzt wird, die das Nutzsignal für die Codelesung erzeugt.

GB-A-2 059 354 zeigt das Aufbringen von Codemarkierungen auf glasartigen Oberflächen. Am Ort der Markierungen streut die Oberfläche diffus. FR-A-2 594 982 zeigt die Verwendung von Codematerial mit katadioptischer (als Katzenauge wirkender) Oberfläche.

Aufgabe der Erfindung ist es, Verfahren der eingangs genannten Art so zu verbessern, daß die Codemarkierungen einfacher aufbringbar bzw. besser und sicherer lesbar sind, und außerdem eine mit solchen verbesserten Codemarkierungen versehene Flasche zu schaffen.

Diese Aufgabe ist erfindungsgemäß dadurch gelöst, daß zum Aufbringen ein Laser eingesetzt wird und daß der Grund jeder Codemarkierung als diffus streuender Reflektor mit einer Feingeometrie in Form eines Rasters aus Erhebungen oder Vertiefungen hergestellt wird.

Das Aufbringen der optisch lesbaren Codemarkierungen wird durch das Verfahren nach der Erfindung sehr vereinfacht, weil zu deren Herstellung lediglich der Laser mit entsprechender Kadenz eingeschaltet werden muß. An der Blasform selber brauchen keine Umstellungen vorgenommen zu werden, weil das Aufbringen der optisch lesbaren Codemarkierungen auf die Kunststoffflaschen erst nach der Blasform erfolgt. Die Umstellzeit, die wie oben erwähnt im Stand der Technik sechs Stunden betragen kann, beträgt in einem vergleichbaren Fall bei Anwendung des Aufbringverfahrens nach der Erfindung lediglich etwa fünf Minuten. Da beide Verfahren nach der Erfindung an den fertigen Kunststoffflaschen durchgeführt werden, können sie ohne weiteres auch in einer Inspektionsmaschine gemäß dem erwähnten älteren Patent derselben Anmelderin eingesetzt werden. In diesem Fall werden die Kunststoffflaschen aus allen 48 Blasformen zu einer gemeinsamen Linie zusammengefaßt, die zur Verpackung oder zur Palettisierung führt. Die Inspektionsmaschine prüft jede hergestellte Flasche und mittels Laser werden die optisch lesbaren Codemarkierungen aufgebracht. Da die Kunststoffflaschen direkt geprüft und beschriftet werden, weiß man später, welche Flasche von welchem Hersteller in welcher Linie in welchem Jahr hergestellt worden ist. Wenn später Fabrikationsfehler oder Materialfehler auftreten, kann dadurch, daß bei späteren Inspektionen die Codemarkierungen immer wieder gelesen werden, bei Rückgabeflaschen das Auftreten von Fehlern statistisch erfaßt werden. Diese statistische Erfassung kann zur Produktionsverbesserung ausgewertet werden.

Die durch das Verfahren nach der Erfindung aufgebrachten optisch lesbaren Codemarkierungen haben vorzugsweise zwar die Form von Strichen, diese bestehen jedoch aus Vertiefun gen, die am Grund nicht einfach eine Fläche haben, sondern ein gewisses Raster, das ein gewisses Reflexionsvermögen hat, durch das sich die Codemarkierungen eindeutig von Kratzern od.dgl. unterscheiden, welche ein wesentlich geringeres Reflexionsvermögen haben. Die mit dem Laser aufgebrachten optisch lesbaren Codemarkierungen sind für das menschliche Auge nur bei sehr genauem Hinsehen erkennbar, weshalb sie auch den ästhetischen Eindruck der Flasche nicht stören.

Vorteilhafte Ausgestaltungen der Erfindung bilden den Gegenstand der Unteransprüche.

Vorzugsweise werden zur Markierung entweder mit einem auf die Flaschenoberfläche fokussierten Strahl eines Impulslasers viele Vertiefungen in Form der gewünschten Codemarkierungen auf die Oberfläche aufgebracht, d.h. eingebrannt, oder es wird ein nicht fokussierter Laserstrahl über eine entsprechend ausgebildete Maske so auf die zu markierende Flaschenoberfläche geführt, daß in die Oberfläche gleichzeitig eine Vielzahl runder oder linienförmiger (parallel oder rautenförmig angeordneter) Vertiefungen in der Form der gewünschten Codemarkierungen eingebracht wird. Allen diesen Codemarkierungen ist gemeinsam, daß es sich um Vertiefungen handelt, die einen Raster von reflektierenden Flächen aufweisen, welche später bei dem automatischen Lesen als Reflexionsflächen genutzt werden können, d.h. insgesamt wie ein "Katzenauge" wirken. Die Punkte oder Linien, die das Raster bilden, machen die Codemarkierung besser lesbar als eine Fläche, die einfach abgetragen worden ist.

Auf besonders zweckmäßige Weise läßt sich das Raster mit einer Maske auch so erzeugen, daß über deren Öffnungen ein Sieb (ähnlich einem Milch- oder Kaffeesieb) angeordnet wird.

Die erzielte Rasterung hat auch die Schaffung des erfindungsgemäßen Leseverfahrens ermöglicht, das eine besonders gute Codelesesicherheit gewährleistet, weil nicht die Flaschenoberfläche, sondern der Grund der Markierungen als Reflektor benutzt wird. Ein bevorzugter Winkel für den Lesestrahl beträgt dabei 42°. Dabei kann der Lichteinfallwinkel gleich dem Lichtausfallwinkel sein, oder aber der Lichtausfallwinkel kann der Komplementwinkel bezüglich eines Lots auf die Flaschenoberfläche sein. Im erstgenannten Fall enthält der Sensor Sende- und Empfangslichtfasern, wogegen im zweiten Fall unter dem Einfallwinkel lediglich Sendelichtleitfasern und unter dem Ausfallwinkel lediglich Empfangslichtleitfasern vorgesehen sind.

Ausführungsbeispiele der Erfindung werden im folgenden unter Bezugnahme auf die Zeichnungen näher beschrieben. Es zeigt
- Fig. 1: eine Station zur Inspektion von Kunststoffflaschen und einen Laser zum Aufbringen von optisch lesbaren Codemarkierungen,
- Fig. 2 und 3: Skizzen zur Erläuterung des erfindungsgemäßen Verfahrens zum Lesen von Codemarkierungen, und
- Fig.4 und 5: im Querschliff bzw. in Draufsicht und mit 100-bzw. 50-facher Vergrößerung Aufnahmen von mit dem Laser hergestellten Codemarkierungen.

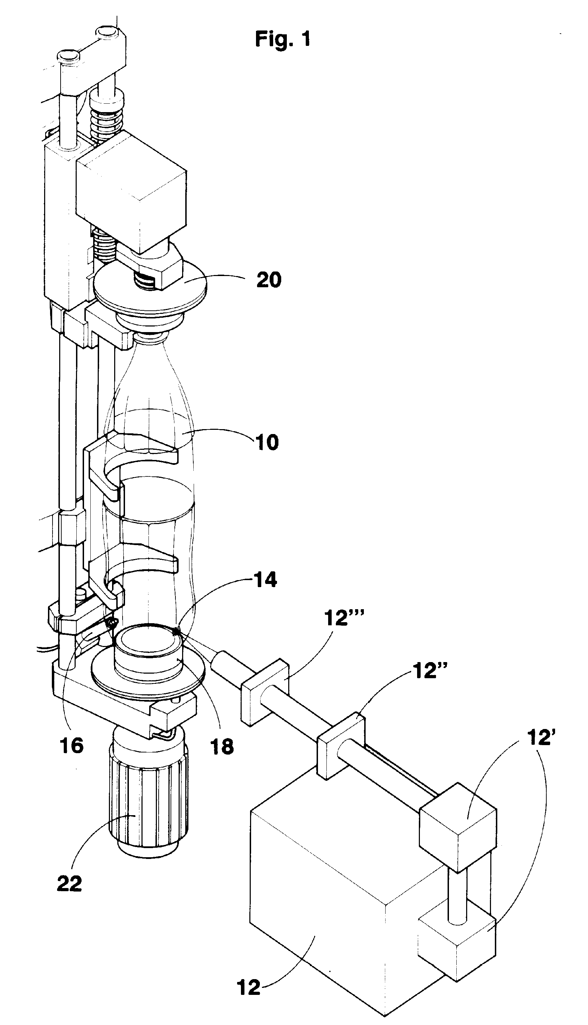

Fig. 1 zeigt eine Station des Karussells einer Inspektionsmaschine für Kunststoffflaschen 10. Die Station befindet sich gerade gegenüber einem Laser 12 zum Aufbringen von optisch lesbaren Codemarkierungen 14 mittels eines 90°-Strahlumlenkers 12′, eines Maskenhalters 12˝ und einer Fokussiereinheit 12‴. Gemäß Fig. 1 hat jede Station einen optisch-elektrischen Sensor 16 zum Lesen der Codemarkierungen 14. Die gezeigte Station weist einen unteren Teller 18 und einen oberen Teller 20 auf, zwischen denen die Flasche 10 eingespannt und mittels eines Elektromotors 22 in Drehung versetzbar ist. Der Motor 22 ist als Antrieb statt eines mit einem Sonnenrad kämmenden Planetenrades (vgl. das ältere Patent derselben Anmelderin) vorgesehen, weil während des Markiervorganges die Station still steht, die Flasche sich aber um ihre Achse zu drehen hat. Der Laser 12 könnte auch auf dem feststehenden Sonnenrad (nicht dargestellt) angeordnet und jeder Station ein Strahlumlenksystem 12′, 12˝, 12‴ zugeordnet werden. In diesem Fall wäre statt des Motors 22 das sonst übliche Planetenrad (nicht dargestellt) vorgesehen, dessen Verzahnung in die des Sonnenrads eingreift, damit die Flasche durch den Umlauf des Karrussels in Drehung versetzt wird.

Wenn der Laser 12 nicht in einer Inspektionsmaschine sondern in einer Vorrichtung (nicht dargestellt) benutzt wird, in der die Kunststoffflaschen 10 lediglich einzeln markiert werden, hätte diese Vorrichtung auch den Aufbau der in Fig. 1 dargestellten Station. Unterschiedlich wäre lediglich, daß der Sensor 16 nicht erforderlich wäre. Die Einrichtungen zur Stromversorgung und Steuerung des Lasers und des Motors 22 sind der Übersichtlichkeit halber nicht dargestellt worden.

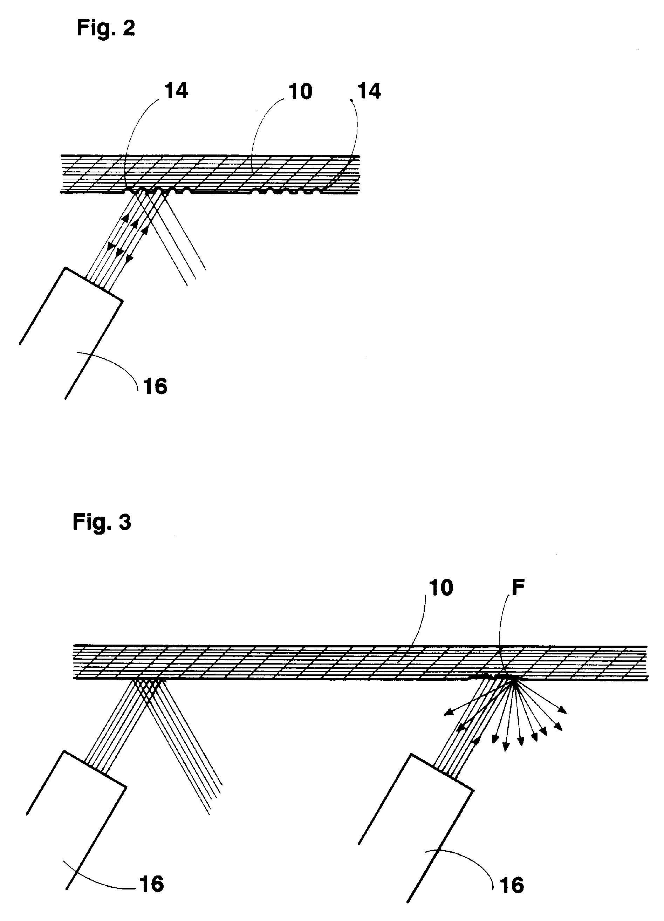

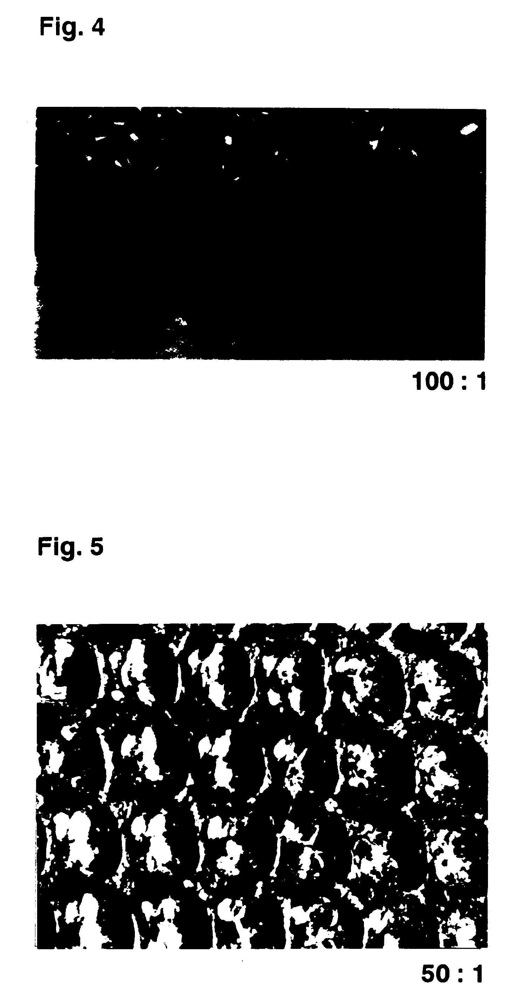

Mit Hilfe des Lasers 12 werden, vorzugsweise strichförmige, Codemarkierungen in die Oberfläche der Kunststoffflasche 10 eingebrannt. In Fig. 1 sind drei dieser strichförmigen Codemarkierungen 14 dargestellt. Die Kunststoffflasche 10 dreht sich vor dem Laser 12, der dabei die Codemarkierungen 14 etwa auf dem halben Umfang der Kunststoffflasche herstellt. Die Form der strichförmigen Codemarkierungen 14 wird hier mit Hilfe einer Öffnung in einer Maske (nicht dargestellt) erzeugt. Durch Verschieben der Maske in dem Strahl des Lasers 12 oder durch entsprechende Triggerung desselben werden die Codemarkierungen 14 eine nach der anderen aufgebracht. Die Maske kann auch mit mehreren Öffnungen versehen sein, so daß sich die Codemarkierungen 14 gruppenweise aufbringen lassen. Erfindungswesentlich ist, daß die aufgebrachten Codemarkierungen am Grund einen Raster aus Erhebungen oder Vertiefungen (vgl. die Fig. 2, 4 und 5) aufweisen, so daß in der Feingeometrie eine Vielzahl von Flächen vorhanden ist, die Licht in einer Richtung reflektieren, welche einen von 90° verschiedenen Winkel mit der Flaschenoberfläche bildet. Zum Erzielen des Rasters wird jede Öffnung in der Maske mit einem Strichgitter, einem Punktgitter oder einfach einem Sieb (z.B. dem o.g. Milch- oder Kaffeesieb) abgedeckt, um dadurch ein feines Linienraster oder ein feines Punktraster am Grund der Codemarkierung 14 zu erzeugen.

Als Laser ist ein Gaslaser oder ein YAG-Laser verwendbar, und die Codemarkierungen können durch einen Laserstrahl mit gleichmäßigem rechteckigen Mode über die Maske aufgebracht werden. Statt einer Maske mit vor deren Öffnung angeordnetem Gitter oder Sieb kann auch ein vektorgesteuerter YAG- oder Gaslaser benutzt werden, mit dem sich eine Vielzahl von Punkten herstellen läßt. Grundsätzlich wirkt das Punkt- oder Linienraster wie die Prismen des Katzenauges an einem Fahrrad od.dgl.

Bei der in Fig. 1 dargestellten Ausführungsform lassen sich Kunststoffflaschen auf eine Reihe von Parametern überprüfen, nämlich ob Boden, Hals und Öffnung rechtwinkelig zur Flaschenachse sind, ob Flaschenhöhe und Flaschenvolumen die richtigen Werte haben, usw. Wenn die Inspektionsmaschine im Anschluß an eine Blasformmaschine benutzt wird, werden mit dem Laser 12 Codemarkierungen 14 hergestellt, die anschließend mit Hilfe des Sensors 16 auf Korrektheit überprüft werden können. Wenn es sich um Rückgabeflaschen handelt, ist der Laser 12 üblicherweise nicht in Betrieb, und der Sensor 16 liest lediglich die Codemarkierungen, um Hersteller, Herstelldatum, usw. zu ermitteln. Der Laser 12 kann aber zusätzlich benutzt werden, um beispielsweise eine zusätzliche Codemarkierung bei jedem Inspektionsvorgang aufzubringen, woraus sich später die Zahl der Wiederbefüllungen der Kunststoffflasche 10 ermitteln läßt.

Wenn die einzugebenden Codemarkierungen täglich zu wechseln sind, beispielsweise wegen des einzugebenden Datums, wird bei einem vektorgesteuerten oder elektronisch getriggerten Gaslaser lediglich in die Steuerung eingegriffen. Bei einem Laser, bei dem mit einer Maske gearbeitet wird, wird einfach eine neue Maske gestanzt. Für diesen Zweck kann neben dem Laser eine kleine Stanzvorrichtung aufgestellt sein, in der die Bedienungsperson die Masken nach Bedarf stanzen kann. Auch in diesem Fall beträgt die für das Umstellen der Codemarkierungen erforderliche Stillstandszeit der Maschine lediglich einige Minuten.

Die Fig. 2, 4 und 5 zeigen im Querschnitt, im Querschliff bzw. in Draufsicht einen Teil der Wand der Kunststoffflasche 10 mit den Codemarkierungen 14. Der Grund jeder Codemarkierung 14 ist als diffus streuender Reflektor mit dem Laser 12 hergestellt worden. Weiter ist in Fig. 2 der Sensor 16 dargestellt, der mit der Oberfläche (genauer, mit einer Tangente an die Oberfläche) der Kunststoffflasche 10 einen Winkel bildet, z.B. von 42°. Über Sendelichtleitfasern schickt der Sensor 16 Licht auf die Oberfläche der Kunststoffflasche 10. Wenn keine Codemarkierung 14 vorhanden ist, wird durch die glatte Oberfläche der Kunststoffflasche 10 kein Licht zurück in den Sensor 16 reflektiert. Ist, wie in Fig. 2 gezeigt, eine Markierung 14 vorhanden, wird an dieser Licht reflektiert, das über koaxial zu den Sendelichtleitfasern angeordnete Empfangslichtleitfasern durch den Sensor 16 zurück zu einem photoelektrischen Empfänger (nicht dargestellt) geleitet wird. Verwendbar wären auch fokussierte Lichttaster, d.h. Sensoren ohne Lichtleiter.

Figur 3 zeigt links den Fall, in welchem an der Oberfläche der Kunststoffflasche 10 keine Codemarkierung 14 vorhanden ist. Dort ist der Ausfallwinkel des Lichtstrahls gleich dessen Einfallwinkel, so daß kein Licht zurück in den Sensor 16 reflektiert wird. Rechts in Fig. 3 ist ein Fehler F angedeutet, der aus einem Kratzer od.dgl. besteht und nicht das Punktraster der Codemarkierungen 14 am Grund hat, weshalb die reflektierte Strahlung wesentlich diffuser zerstreut wird als an einer Codemarkierung, so daß weniger Licht in den Sensor 16 zurückgelangt als in dem in Fig. 2. dargestellten Beispiel. Dabei darf auch nicht übersehen werden, daß ein Kratzer oder ähnlicher Defekt zumeist mehr oder weniger eindimensional ist, wogegen die Codemarkierungen 14 vorzugsweise Flächen sind und daher durch einen Kratzer od.dgl. in ihrem Aussagegehalt kaum beeinträchtigt werden können. Die Codemarkierungen 14 sind durch die hier beschriebenen Verfahren sowohl auf einfache Weise aufbringbar als auch auf wiederverwendbaren Kunststoffflaschen nach mehrmaligem Gebrauch derselben noch sicher lesbar.

Zum automatischen Lesen der Codemarkierungen 14 wird bevorzugt zwar der aus Lichtleitfasern aufgebaute Sensor 16 mit zentrisch angeordneten Sendelichtleitfasern und radial angeordneten Empfängerlichtleitfasern verwendet, Senden und Empfangen können jedoch auch getrennt durchgeführt werden. In diesem Fall bildet der Empfänger den gleichen Winkel mit der Oberfläche der Kunststoffflasche 10 wie der Sender, wobei dieser Winkel je nach Sensor einen bestimmten Wert hat, für den oben als Beispiel 42° angegeben wurde. Die Ausführungsform mit koaxial angeordneten Emissions- und Empfängerlichtleitfasern wird aber bevorzugt, weil in diesem Fall die Codemarkierungen sicherer gelesen werden können. Da in dem Bereich, wo keine Markierung vorliegt (ebene, glatte Oberfläche), das reflektierte Licht nicht in die Empfängerlichtleitfasern gelangt, wogegen dort, wo Markierungen vorhanden sind, die reflektierenden Flächen der Vertiefung das Licht in die Empfängerlichtleitfasern leiten, können Kratzer und Oberflächenbeschädigungen nicht fälschlicherweise als Markierungen interpretiert werden. Es ist nämlich sehr unwahrscheinlich, daß Beschädigungen oder Kratzer eine Vielzahl von entsprechend angeordneten Reflexionsflächen haben. Auch Oberflächenbeschädigungen an den Codemarkierungen selbst beeinträchtigen die Lesbarkeit nur, wenn sie entsprechend großflächig sind und ebenso tief in das Material reichen wie die Codemarkierung selbst, d.h., wenn die Codemarkierung fast vollständig entfernt wurde.

Das beschriebene bevorzugte Beispiel ist zwar auf Flaschen aus Kunststoff gerichtet, die erfindungsgemäßen Verfahren eignen sich aber ohne weiteres auch für Flaschen aus Glas.

## Patentansprüche

1. Verfahren zum Aufbringen von optisch lesbaren Codemarkierungen (14) in Form von Vertiefungen auf die Oberfläche von Flaschen (10), insbesondere aus Kunststoff, dadurch **gekennzeichnet**,
dass die Codemarkierungen durch Lasereinwirkung als Vertiefungen hergestellt werden, deren Grund eine im Vergleich zur umgebenden Oberfläche veränderte, diffuse Streuung aufweist, und jede Codemarkierung (14) an ihrem Grund mit einer Feingeometrie in Form eines Rasters aus Erhebungen oder Vertiefungen hergestellt wird.

2. Verfahren nach Anspruch 1, dadurch gekennzeichnet, dass die Codemarkierungen als strichförmige Codemarkierungen eine nach der anderen aufgebracht werden.

3. Verfahren nach Anspruch 1, dadurch gekennzeichnet, dass die Codemarkierungen als strichförmige Codemarkierungen gruppenweise aufgebracht werden.

4. Verfahren nach einem der Ansprüche 1 bis 3, dadurch gekennzeichnet, daß die Codemarkierungen durch einen Laserstrahl mit gleichmäßigem rechteckigen Mode über eine Maske aufgebracht werden.

5. Verfahren nach einem der Ansprüche 1 bis 3, dadurch gekennzeichnet, daß die Codemarkierungen durch einen fokussierten, vektorgesteuerten Strahl eines Impulslasers jeweils in Form einer Vielzahl von Vertiefungen aufgebracht werden.

6. Verfahren nach einem der Ansprüche 1 bis 4, dadurch gekennzeichnet, daß eine Maske mit einem Strichgitter zum Aufbringen eines feinen Linienrasters verwendet wird.

7. Verfahren nach einem der Ansprüche 1 bis 4, dadurch gekennzeichnet, daß eine Maske mit einem Punktgitter zum Aufbringen eines feinen Punktrasters verwendet wird.

8. Verfahren nach einem der Ansprüche 1 bis 4, dadurch gekennzeichnet, daß ein Sieb zum Aufbringen eines feinen Punktrasters verwendet wird.

9. Verfahren nach Anspruch 4, dadurch gekennzeichnet, daß eine Maske mit Öffnungen, welche durch ein feines Sieb abgedeckt sind, verwendet wird.

10. Flasche, insbesondere aus Kunststoff, mit optisch lesbaren Codemarkierungen in Form von Vertiefungen in der Oberfläche der Flasche, dadurch gekennzeichnet, daß der Grund jeder Codemarkierung (14) eine mittels Laser hergestellte Feingeometrie in Form eines Rasters aus Erhebungen oder Vertiefungen aufweist.

11. Verfahren zum Lesen von optisch lesbaren Codemarkierungen auf der Oberfläche einer Flasche nach Anspruch 10, dadurch gekennzeichnet, daß ein Lesestrahl unter einem Winkel von weniger als 90° auf die genannte Oberfläche geschickt und ein unter demselben Winkel reflektierter Strahl aufgefangen und ausgewertet wird.

## Claims

1. A method of applying optically readable code markings (14) in the form of indentations to the surface of bottles (10), particularly bottles made of plastic, characterised in that the code markings are produced by laser action as indentations, the bases of which have an altered, diffuse dispersion compared with the surrounding surface, and each code marking (14) is produced with a fine geometry at its base in the form of a grid comprising elevations or indentations.

2. A method according to claim 1, characterised in that the code markings are applied one after the other as bar-shaped code markings.

3. A method according to claim 1, characterised in that the code markings are applied in groups as bar-shaped code markings.

4. A method according to any one of claims 1 to 3, characterised in that the code markings are applied by a laser beam having a uniform rectangular mode, via a mask.

5. A method according to any one of claims 1 to 3, characterised in that the code markings are each applied in the form of a multiplicity of indentations by a focused, vector-controlled beam of a pulsed laser.

6. A method according to any one of claims 1 to 4, characterised in that a mask is used which has a ruled grating for the application of a fine grid of lines.

7. A method according to any one of claims 1 to 4, characterised in that a mask is used which has a point grating for the application of a fine grid of points.

8. A method according to any one of claims 1 to 4, characterised in that a screen is used for the application of a fine grid of points.

9. A method according to claim 4, characterised in that a mask is used which has openings which are covered by a fine screen.

10. A bottle, particularly made of plastic, having optically readable code markings in the form of indentations in the surface of the bottle, characterised in that the base of each code marking (14) has a fine geometry in the form of a grid comprising elevations or indentations produced by means of a laser.

11. A method of reading optically readable code markings (14) on the surface of a bottle according to claim 10, characterised in that a reading beam is directed on to the said surface at an angle of less than 90° and a beam reflected at the same angle is detected and evaluated.

## Revendications

1. Procédé pour apposer sur la face superficielle de bouteilles (10) de préférence en matériau synthétique, des marques de codage sous forme de dépressions lisibles optiquement, caractérisé en ce que les marques de codage en dépressions sont obtenues à l'aide d'un laser et présentent un fond dont la dispersion diffuse est modifiée par rapport à la face superficielle environnante et en ce que chaque marque de codage (14) est constituée d'une géométrie fine en forme d'un réseau de creux et de bosses du fond.

2. Procédé selon la revendication 1, caractérisé en ce que les marques de codage sont apposées successivement sous la forme de traits.

3. Procédé selon la revendication 1, caractérisé en ce que les marques de codage sont apposées en groupe sous la forme de traits.

4. Procédé selon l'une des revendications 1 à 3, caractérisé en ce que les marques de codage sont apposées à l'aide d'un faisceau laser à mode rectangulaire régulier via un masque.

5. Procédé selon l'une des revendications 1 à 3, caractérisé en ce que les marques de codage sont apposées à l'aide d'un laser à impulsions dont le faisceau est focalisé et commandé vectoriellement, sous forme de dépressions multiples.

6. Procédé selon l'une des revendications 1 à 4, caractérisé en ce qu'on utilise un masque avec un treillis de traits pour apposer un réseau fin de lignes.

7. Procédé selon l'une des revendications 1 à 4, caractérisé en ce qu'on utilise un masque avec un treillis de points pour apposer un fin réseau de points.

8. Procédé selon l'une des revendications 1 à 4, caractérisé en ce qu'on utilise un tamis pour apposer un réseau fin de points.

9. Procédé selon la revendication 4, caractérisé en ce qu'on utilise un tamis à trous qui sont recouverts d'un tamis fin.

10. Bouteille de préférence en matériau synthétique portant sur sa face superficielle des marques de codage sous forme de dépressions obtenues à l'aide d'un laser, caractérisé en ce que le fond de chaque marque de codage (14) consiste en une géométrie fine en forme d'un réseau de creux et de bosses.

11. Procédé de lecture de marques de codage lisibles optiquement portées sur la face superficielle d'une bouteille selon la revendication 10, caractérisé en ce que le faisceau de lecture est dirigé sur cette face superficielle sous un angle inférieur à 90° et recueilli en un faisceau réflecté sous le même angle et ensuite exploité.
